# EUROPÄISCHE PATENTANMELDUNG

(11) **EP 3 035 097 A1**
(43) Veröffentlichungstag der Anmeldung: **22.06.2016**
(21) Anmeldenummer: 15003554.1
(22) Anmeldetag: 14.12.2015
(51) Int. Cl.: G02B 6/44

(54) **KASSETTENSPEICHER EINER ÜBERLÄNGE EINER LICHTWELLENLEITUNG**

(30) Priorität: 18.12.2014 DE 102014019086
(71) Anmelder: Dätwyler Cabling Solutions AG, 6460 Altdorf (CH)
(72) Erfinder: Arnold, Martin, 5630 Muri (CH); Stuhlträger, Erich, 6460 Altdorf (CH); Zeng, Songming, Yangpu District Shanghai (CH); Wu, Jun, Putuo District, Shanghai (CN)
(74) Vertreter: Samson & Partner Patentanwälte mbB

(57) **Zusammenfassung**

Die Erfindung betrifft einen Kassettenspeicher (1, 2, 3) einer Überlänge einer Lichtwellenleitung (4, 5, 6), wobei die Lichtwellenleitung (4, 5, 6) wenigstens einen Lichtwellenleiter (7-15) in einer Ummantelung (20) aufweist. Der Kassettenspeicher (1, 2, 3) weist ein Kassettengehäuse (16), einen umgebenden Rahmen (17), eine Kassettenabdeckung (18) und einen Kassettenboden (19) auf. Zwischen dem Kassettenboden (19) und der Kassettenabdeckung (18) sind zwei Überlängenreiter (22, 23) der Lichtwellenleitung (4, 5, 6) angeordnet. Der Kassettenboden (19) und die Kassettenabdeckung (18) weisen jeweils eine Längsführung (21, 21') auf, mit denen die Überlängenreiter (22, 23) in Eingriff stehen, wobei die zwei Überlängenreiter (22, 23) in einem variablen Abstand (a) zueinander gehalten und einander gegenüberliegend angeordnet sind. Wenigstens einer der Überlängenreiter (22) ist gleitverschieblich in den Längsführungen (21, 21') geführt. Die Überlängenreiter (22, 23) sind federelastisch bei minimaler Vorspannung auf einem maximalem Abstand (aₘₐₓ) bei maximaler gespeicherter Lichtwellenleitungsüberlänge (25) gehalten und liegen bei minimaler gespeicherter Lichtwellenleitungsüberlänge (25) unter maximaler federelastischer Vorspannung aneinander.

## Beschreibung

Die Erfindung betrifft einen Kassettenspeicher einer Überlänge einer Lichtwellenleitung, wobei die Lichtwellenleitung wenigstens einen Lichtwellenleiter in einer Ummantelung aufweist. Derartige Lichtwellenleitungen können in einer Ummantelung von etwa 2,5 mm Durchmesser bis zu 16 Lichtwellenleiter voneinander beabstandet enthalten. Physikalisch gesehen sind die Lichtwellenleiter dielektrische Wellenleiter und aus konzentrischen Schichten aufgebaut, wobei im Zentrum ein lichtführender Kern von etwa 1 Mikrometer Dicke angeordnet ist, der von einem Mantel aus lichtleitenden Materialien mit abnehmenden Brechungsindex umgeben ist. Ferner sind weitere Schutzschichten aus Kunststoff als Ummantelung vorgesehen.

Die Ummantelung aus Kunststoff schützt die etwa 100 Mikrometer dicke Lichtleitfaser vor Beschädigung und ermöglicht beispielsweise mittels einer Gleitschicht zwischen Lichtwellenleiter und Kunststoffummantelung ein relativ problemloses Krümmen der Lichtwellenleitung um einen minimalen Krümmungsradius, der bei etwa 50 mm bis 100 mm liegt. Je nach Anwendungsfall haben Nachrichtenübertragungslichtwellenleitungen einen Durchmesser von nur wenigen Millimetern und werden in der Nachrichtentechnik als Übertragungsmedium für leitungsgebundene Kommunikationssysteme eingesetzt und ersetzen in vielen Bereichen die elektrische Übertragung über Kupferadern von Kupferleitungen.

Die Lichtwellenleitungen mit ihren Lichtwellenleitern bzw. Lichtleitfasern werden zu Lichtwellenkabeln gebündelt und Schaltschränken zugeführt, in denen die Lichtwellenleitungen eines Lichtwellenkabels vereinzelt werden. Die in den Lichtwellenleitungen enthaltenen Lichtwellenleiter bzw. Lichtleitfasern werden an den Schaltschränken untereinander verbunden. Dazu ist es erforderlich, dass sogenannte Überlängen der Lichtwellenleitungen zu einem Bearbeitungstisch geführt werden können und nach dem Verbinden wieder in dem Schaltschrank bzw. einem Regal beispielsweise hängend untergebracht werden müssen. Das bedeutet, dass in dem Regal eines Schaltschrankes viel Raum für Lichtwellenleitungsüberlängen mit bis zu zwei Metern Überlänge vorgehalten werden müssen, damit die Verbindung, vorzugsweise eine Spleißung, bei der die Lichtleitfasern beispielsweise von zwei Lichtwellenleitungen an Stirnflächen der Lichtleitfasern auf einem separaten Tisch ohne Behinderung beim Spleißen zusammengesteckt, zusammengeklebt oder zusammengeschweißt werden können. Dabei ist nicht nur der zusätzlich nötige Platz im Regal ein Problem, sondern auch die saubere Ablage der Lichtwellenleitungsüberlängen vor und nach dem Verbinden.

Aus der Druckschrift DE 199 56 298 A1 sowie aus der Druckschrift DE 100 41 337 A1 ist für derartige Überlängen von Lichtwellenleitungen eine Wickelvorrichtung zum Umlenken und/oder Aufnehmen wenigstens einer zwischen optischen Bauelementen verlegten Lichtwellenleitung bekannt. Diese Wickelvorrichtung weist eine Halteeinrichtung auf, welche die Lichtwellenleitung zumindest stellenweise entlang eines Wickelweges hält. Dabei ist der Wickelweg durch die Halteeinrichtung vorgegeben, so dass Überlängen durch manuelles Einlegen in oder Aufwickeln auf die Halteeinrichtung verstaut werden können und eine Entnahme nur durch manuelles Abwickeln von der Halteeinrichtung zur Verfügung gestellt werden kann.

Weiterhin ist aus der Druckschrift DE 37 06 518 A1 ein Verfahren und eine Anordnung zum Abwickeln der Überlängen miteinander verbundener Lichtwellenleiter einer Lichtwellenleitung mittels einer Wickelkassette bekannt. Dazu kann die Verbindungsstelle von zwei Überlängen in einem Mittenbereich einer S-förmigen Kassette eingelegt werden und anschließend können durch manuelles Drehen der S-förmigen Kassette die beiden Überlängen der Lichtwellenleitung außen auf die Kassette manuell aufgewickelt und in einem Regal eines Schaltschranks verstaut werden.

Aufgabe der Erfindung ist es, einen Kassettenspeicher für Überlängen von Lichtwellenleitungen zu schaffen, der in einem Regal ortsfest angeordnet werden kann und Überlängen von Lichtwellenleitungen speichert, die aus dem ortsfesten Kassettenspeicher ausziehbar sind und automatisch in dem Kassettenspeicher einziehbar sind.

Gelöst wird diese Aufgabe durch den Gegenstand der unabhängigen Ansprüche. Weiterbildungen sind Gegenstand der abhängigen Ansprüche.

Gemäß einer Ausführungsform der Erfindung wird ein Kassettenspeicher einer Überlänge einer Lichtwellenleitung geschaffen, wobei die Lichtwellenleitung wenigstens einen Lichtwellenleiter in einer Ummantelung aufweist. Der Kassettenspeicher weist ein Kassettengehäuse, einen umgebenden Rahmen, eine Kassettenabdeckung und einen Kassettenboden auf. Zwischen dem Kassettenboden und der Kassettenabdeckung sind zwei Überlängenreiter der Lichtwellenleitung angeordnet. Der Kassettenboden und die Kassettenabdeckung weisen jeweils eine Längsführung auf, mit denen die Überlängenreiter in Eingriff stehen, wobei die zwei Überlängenreiter in einem variablen Abstand zueinander gehalten und einander gegenüberliegend angeordnet sind. Wenigstens einer der Überlängenreiter ist gleitverschieblich in den Längsführungen geführt. Die Überlängenreiter werden federelastisch bei minimaler Vorspannung auf einem maximalen Abstand bei maximaler gespeicherter Lichtwellenleitungsüberlänge gehalten, und die Überlängenreiter liegen bei minimaler gespeicherter Lichtwellenleitungsüberlänge unter maximaler federelastischer Vorspannung aneinander.

Ein derartiger Kassettenspeicher einer Überlänge einer Lichtwellenleitung hat den Vorteil, dass zum Verbinden einzelner Lichtwellenleiter bzw. Lichtleitfasern die Möglichkeit besteht, entsprechende Überlängen der Lichtwellenleitungen aus einem oder mehreren Kassettenspeichern herauszuziehen und die entsprechenden Lichtwellenleiter bzw. Lichtleitfasern zu verbinden und nach einer entsprechenden Spleißung die Lichtwellenleitungsüberlängen in die Kassettenspeicher aufgrund der Federvorspannung, die sich beim Herausziehen der Lichtwellenleitungen aus dem oder den Kassettenspeicher zwischen den Überlängenreitern ausgebildet hat, zurück gleiten zu lassen. Im Regal eines Schaltschrankes sind danach gut sichtbar die einzelnen Verbindungsstellen an bzw. außerhalb der jeweiligen Kassettenspeicher zu sehen, während die Überlängen der Lichtwellenleitungen innerhalb der Kassettenspeicher platzsparend und geordnet angeordnet sind. Ein manuelles Auf- und Abwickeln von Überlängen von Lichtwellenleitern auf oder in entsprechenden Kassetten kann damit entfallen. Das Aufnehmen der Überlängen in den Kassettenspeicher kann durch ein vorkonfektioniertes Einzugsseil, das bereits anstelle der Überlängen in dem vorkonfektionierten Kassettenspeicher gelagert ist, erleichtert werden.

In einer weiteren Ausführungsform der Erfindung weist jeder der beiden Überlängenreiter der Lichtwellenleitung Führungsrollen auf, die einen Außenmantel mit eingearbeiteten Führungsrillen für ein beabstandetes Anlegen und Führen der Überlänge wenigstens einer Lichtwellenleitung aufweisen. Die Anzahl der Führungsrillen in einer Führungsrolle hängt von der maximalen Speicherkapazität der Speicherkassette für eine Überlänge ab. Vorzugsweise sind die erfindungsgemäßen Kassettenspeicher für mindestens zwei Meter einer Überlänge ausgelegt, um genügend Lichtwellenleitermaterial zur Verfügung zu haben, so dass Bearbeitungsvorgänge, wie das Spleißen von Lichtwellenleitern einer Lichtwellenleitung, auf einem Bearbeitungstisch nahe bei dem entsprechenden Schaltschrank für Lichtwellenleitungen möglich ist. Für eine Lichtwellenleitung mit einem Manteldurchmesser von beispielsweise 2,5 mm müssen entsprechend breite Führungsrillen nebeneinander auf einer Führungsrolle in Achsrichtung der Führungsrolle vorgesehen werden, ohne dass es zu einer Berührung der einzelnen Wicklungen untereinander auf den Überlängenreitern kommt.

Weiterhin ist es vorgesehen, dass in jedem Überlängenreiter der Lichtwellenleitung mehrere Führungsrollen auf einem Halbkreisbogen angeordnet sind, wobei ein Halbkreisbogenkrümmungsradius des Halbkreisbogens im Vergleich zu den Führungsrillenkrümmungsradien der einzelnen Führungsrollen um ein Vielfaches größer ist. Durch diesen größeren Halbkreisbogenkrümmungsradius wird gewährleistet, dass eine aufgewickelte Überlänge auf dem Überlängenreiter nicht einen zulässigen Krümmungsradius der in der Lichtwellenleitung angeordneten Lichtleitfaser unterschreiten. Dieser minimal zulässige Krümmungsradius einzelner Lichtleitfasern bzw. Lichtwellenleitern hängt von der Wirkung der Krümmungen bei Lichtleitfasern ab. Je enger die Krümmung wird, umso größer wird die Dämpfung und kann bis zur Unterbrechung der Lichtleitung führen, wenn im Bereich der Krümmung das Licht im Kern der Fasern radial nach außen in den Mantelbereich der Lichtleitfaser abgelenkt bzw. gestreut wird. Durch besondere Maßnahmen ist es zwischenzeitlich gelungen für Lichtleitungen im Endverbraucherbereich einen minimalen Krümmungsradius von unter 50 mm zuzulassen. Eine vernachlässigbare Dämpfung wird bei derartigen Lichtwellenleitungen schon bei Krümmungsradien über 50 mm erreicht, so dass die Führungsrollen beispielsweise einem Halbkreisbogen für die Lichtwellenleitungen ausbilden können, der beispielsweise eine Halbkreisbogenkrümmungsradius von 75 mm gegenüber einem deutlich kleineren Führungsrollenradius von etwa 12 mm aufweist.

In einer weiteren Ausführungsform der Erfindung sind in jedem der beiden Überlängenreiter der Lichtwellenleitung mehrere, vorzugsweise zwei, Führungsrollen auf einem gemeinsamen drehfesten Achsenstab übereinander drehbar gelagert. Mit zwei übereinander angeordneten Führungsrollen ist der Vorteil verbunden, dass zwei miteinander zu verbindende Überlängenleitungen mit ihrer Mehrzahl von Lichtwellenleitern in einem Arbeitsgang paarweise verbunden werden können und nach dem Spleißen in den Kassettenspeicher aufgenommen werden können.

Weiterhin ist es vorgesehen, dass jeder Überlängenreiter der Lichtwellenleitung mindestens eine obere und eine untere Festlagerplatte aufweist, zwischen denen in dem Halbkreisboden angeordnete drehfeste Achsenstäbe fixiert sind, auf welchen die Führungsrollen drehbar gelagert sind. Die obere und die untere Festlagerplatte haben den Vorteil, dass sie nicht nur drehfest die Achsenstäbe fixieren, sondern dass die Festlagerplatten durch die Achsenstäbe auch mit hoher Stabilität in einem festem Abstand voneinander gehalten werden, so dass sich die Führungsrollen frei von jeder Berührung der Festlagerplatten beim Ein- und Ausziehen von Überlängen aus dem Kassettenspeicher drehen können.

In einer weiteren Ausführungsform der Erfindung weisen die Festlagerplatten wenigstes eines der Überlängenreiter Kunststoffgleitsteine auf, die mit den Längsführungen des Kassettenbodens und der Kassettenabdeckung gleitverschieblich in Eingriff stehen. Dazu ragen in vorteilhafter Weise die Kunststoffgleitsteine aus den Überlängenreitern hinaus bis in die Längsführungen des Kassettenbodens und der Kassettenabdeckung hinein. Gleichzeitig können die Gleitsteine in entsprechende Ausnehmungen der Festlagerplatten eingepresst oder angegossen oder in anderer Weise an den Festlagerplatten fixiert sein.

In einer weiteren Ausführungsform der Erfindung ist einer der beiden Überlängenreiter der Lichtwellenleitung an einem der Längsenden des Kassettenspeichers fixiert, während der andere der beiden Überlängenreiter der Lichtwellenleitung mit seinen Kunststoffgleitsteinen gleitverschieblich in den Längsführungen des Kassettenbodens und der Kassettenabdeckung gelagert ist. Die Fixierung eines der Überlängenreiter hat gegenüber einer Gleitverschiebung beider Überlängenreiter den Vorteil, dass ein fester fixierter Abstand zum Anfang einer Überlänge geschaffen wird und nur ein freies Ende einer Lichtwellenleitungsüberlänge mit den zu verbindenden Lichtleitfaserendenbeim Ausziehen aus dem Kassettenspeicher variabel ist.

Ferner ist es vorgesehen, dass zwischen der oberen und der unteren Festlagerplatte eine Zwischenlagerplatte in jedem Überlängenreiter des Kassettenspeichers angeordnet ist, die einen oberen Überlängenspeicherbereich von einem unteren Überlängenspeicherbereich trennt, so dass zwei Lichtwellenleitungsüberlängen in einem Kassettenspeicher mit gleicher Länge speicherbar sind. Diese Zwischenlagerplatte zwischen der oberen Festlagerplatte und der unteren Festlagerplatte hat darüber hinaus den Vorteil, dass für die vorgesehene Vorspannung bzw. Zugspannung eines Federmechanismus zentrale Koppelpunkte des Federmechanismus an der Zwischenlagerplatte der Überlängenreiter vorgesehen werden können.

Eine weitere Ausführungsform der Erfindung sieht vor, dass der Kassettenspeicher einen Federmechanismus aufweist, der die Überlängenreiter der Lichtwellenleitung unter Federvorspannung auf Abstand hält, wobei der Federmechanismus derart angeordnet ausgebildet ist, dass mit abnehmendem Abstand zwischen den beiden Überlängenreitern die Federvorspannung zunimmt.

Dazu ist wenigstens ein Federelement mit dem ersten Federelementende an dem gleitverschieblichen Überlängenreiter fixiert und über eine ortsfeste Umlenkrolle mit dem zweiten Federelementende an einer dem gleitverschieblichen Überlängenreiter gegenüberliegenden inneren Querseite des umgebenden Rahmens fixiert. Durch die ortsfeste Umlenkrolle im Bereich der dem fixierten Überlängenreiter gegenüberliegenden Querseite des umgebenden Rahmens ist der Vorteil verbunden, dass die Wirkung der Federkraft derart umgelenkt wird, dass mit abnehmendem Abstand zwischen den beiden Überlängenreitern die Federvorspannung zunimmt.

Vorzugsweise weist der Federmechanismus zwei Federelemente und zwei Umlenkrollen auf beiden Seiten der Überlängenreiter auf. Das hat den Vorteil, dass der gleitverschiebliche Überlängenreiter in der Längsführung des Kassettenbodens und in der Längsführung der Kassettenabdeckung nicht verkantet. Außerdem kann der Kassettenspeicher in seiner Höhe vermindert werden und ist lediglich in seiner Breite um den Federmechanismus erhöht und kann somit in vorteilhafter Weise verbessert in den zur Verfügung stehenden Raum in dem Regal zur Aufnahme der Kassetten eingeschoben werden.

In einer weiteren Ausführungsform der Erfindung weist das Federelement eine helixförmige Schraubenfeder auf, die vorzugsweise auf beiden Seiten der Überlängenreiter in dem Kassettengehäuse auf der vollen Länge oder auf einer Teillänge plus zusätzlich angebrachten Federzugelement angeordnet ist.

Eine alternative Lösung für ein entsprechendes Federelement besteht darin, dass ein unter zunehmender Federspannung ausziehbares Zugelement auf einer Zugelementvorratsrolle angeordnet ist und eine Spiralfeder mit der Achse der Zugelementvorratsrolle verbunden ist, so dass die Federspannung der Spiralfeder zunimmt, sobald das Zugelement aufgrund eines Ausziehens der Überlängenleitung von der Zugelementvorratsrolle abgewickelt wird.

Bei einer weiteren Ausführungsform der Erfindung weist der Kassettenspeicher ein Einzugsseil auf, das um die Überlängenreiter gewickelt ist und mit einem Koppelende sowie einem Einzugsende aus dem Kassettenspeicher herausragt. An dieses vorkonfektionierte Einzugsseil, das in dem Kassettenspeicher angeordnet ist, kann in vorteilhafter Weise die Überlänge einer Lichtwellenleitung an das Koppelende des Einzugsseiles gekoppelt werden. Durch Aufbringen einer Zugkraft auf das herausragende Einzugsende des Einzugsseils können ein Einziehen der angekoppelten Überlänge in den Kassettenspeicher und ein Aufwickeln derselben auf die Überlängenreiter in vorteilhafter Weise erfolgen.

Weiterhin ist es vorgesehen, dass der Kassettenspeicher eine Arretierungseinrichtung aufweist, die ausgebildet ist, um wenigstens eine der Überlängen der Lichtwellenleitungen in einem wenigstens teilweise ausgezogenen Zustand zu arretieren. Damit ist der Vorteil verbunden, dass die Länge der ausgezogenen Überlänge an den Arbeitsbereich bzw. an die Lage eines Arbeitstisches zur Bearbeitung der Lichtwellenleitung, wie zum Spleißen, angepasst und während der Bearbeitung arretiert werden kann.

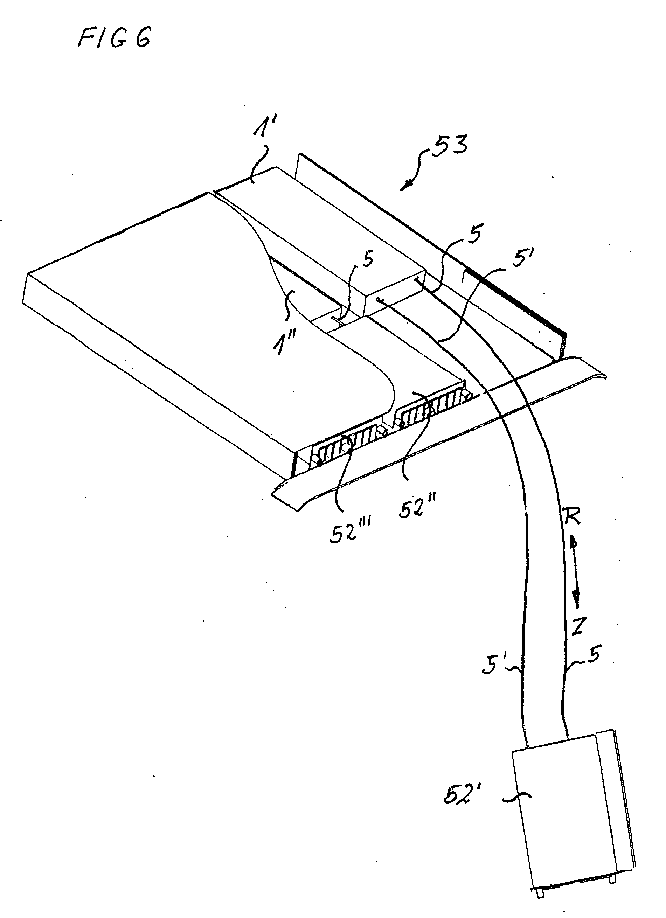

In einer weiteren Ausführungsform der Erfindung steht mit jedem Kassettenspeicher einer Überlänge einer Lichtwellenleitung eine LWL-Modulkassette in Verbindung. In der LWL-Modulkassette sind die einzelnen Lichtwellenleiter bzw. -fasern der in dem Überlängen-Kassettenspeicher gespeicherten Lichtwellenleitung miteinander paarweise verknüpft oder mit anderen Lichtwellenleiterfasern einzeln optisch gekoppelt. Diese Ausführungsform hat den Vorteil, dass bei Verknüpfungs- oder Verbindungsänderungen der Lichtwellenleiterpaarungen, die in der LWL-Modulkassette angeordnet und verstaut sind, lediglich die betreffende LWL-Modulkassette aus einem Verteilerschrank bzw. Rack herausgezogen werden kann, während der Kassettenspeicher im Schaltschrank verbleibt und nur die Überlänge aus dem Kassettenspeicher je nach Bedarf herausgezogen wird, wie es nachfolgend in Figur 6 dargestellt wird und bei einem Zurücklegen der LWL-Modulkassette in den Verteilerschrank die herausgezogenen Überlängen automatisch in den Kassettenspeicher zurückgespult werden.

Ausführungsformen der Erfindung werden nun anhand der beigefügten Figuren näher erläutert.
- Figur 1: zeigt eine schematische auseinandergezogene perspektivische Ansicht eines Kassettenspeichers einer Überlänge einer Lichtwellenleitung gemäß einer ersten Ausführungsform der Erfindung;
- Figur 2: zeigt eine schematische perspektivische Ansicht von Lichtwellenleitungen mit einer unterschiedlichen Anzahl von Lichtwellenleitern;
- Figur 3: zeigt eine schematische perspektivische Ansicht des Kassettenspeichers gemäß der ersten Ausführungsform der Erfindung mit Federmechanismus;
- Figur 4: zeigt eine schematische perspektivische Ansicht eines Kassettenspeichers gemäß einer zweiten Ausführungsform der Erfindung;
- Figur 5: zeigt eine schematische perspektivische Ansicht eines Kassettenspeichers gemäß einer dritten Ausführungsform der Erfindung;
- Figur 6: zeigt einen Abschnitt eines Panels bzw. eine Schublade eines Verteilerschranks in dem mehrere Kassettenspeicher angeordnet sind.

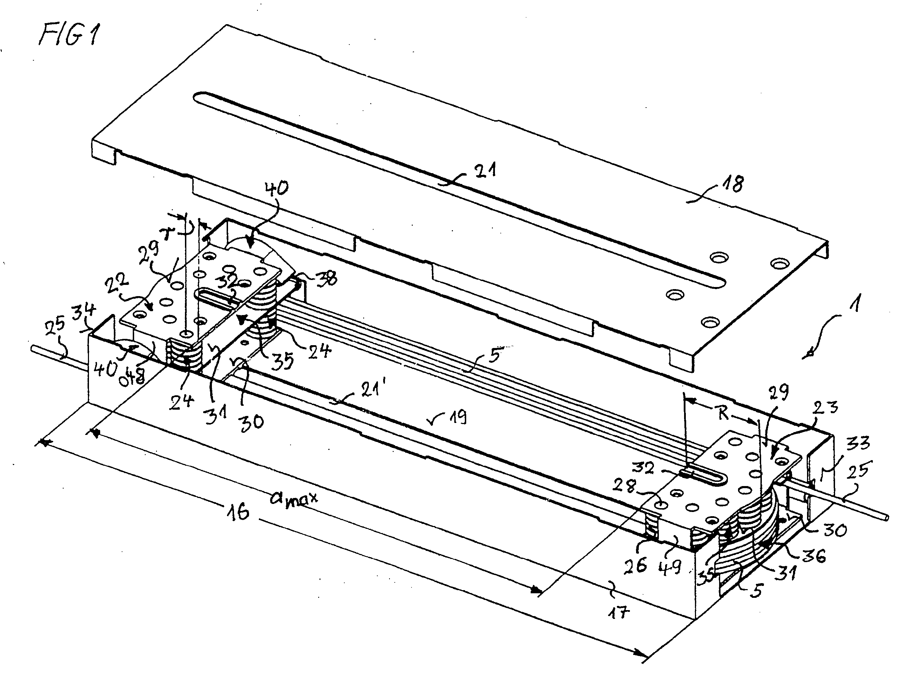

Figur 1 zeigt eine schematische auseinandergezogene perspektivische Ansicht eines Kassettenspeichers 1 einer Überlänge einer Lichtwellenleitung 5 gemäß einer ersten Ausführungsform der Erfindung. Der Kassettenspeicher 1 weist ein Gehäuse 16 auf mit einem Rahmen 17, einer Kassettenabdeckung 18 und einem Kassettenboden 19. Auf dem Kassettenboden 19 sind zwei Überlängenreiter 22 und 23 einander gegenüberliegend angeordnet. Der Überlängenreiter 23 ist an einem Längsende 33 der Speicherkassette 1 auf dem Kassettenboden 19 fixiert, während der Überlängenreiter 22 gleitverschieblich zwischen der Kassettenabdeckung 18 und dem Kassettenboden 19 angeordnet ist und in der Längsführung 21 der Kassettenabdeckung 18 und in der Längsführung 21' des Kassettenbodens 19 geführt wird. Dazu weisen beide Überlängenreiter 22 und 23 Kunststoffgleitsteine 32 auf, die sowohl in die Längsführung 21 der Kassettenabdeckung 18 als auch in die Längsführung 21' des Kassettenbodens 19 eingreifen.

In der hier gezeigten Stellung des gleitverschieblichen Überlängenreiters 22 ist dieser in einem maximalen gleitverschieblichen Abstand aₘₐₓ im Bereich eines Längsendes 34, das dem Längsende 33 des fixierten Überlängenreiters 23 gegenüber liegt, angeordnet. Die Überlängenreiter 22 und 23 weisen jeweils eine obere Festlagerplatte 29 und eine untere Festlagerplatte 30 auf, die von Achsenstäben 28 auf Abstand gehalten werden. Zwischen der oberen Festlagerplatte 29 und der unteren Festlagerplatte 30 ist eine Zwischenlagerplatte 31 angeordnet, die den Speicherbereich des Kassettenspeichers 1 in einen oberen Überlängenspeicherbereich 35 und einen unteren Überlängenbereich 36 aufteilt, so dass in jedem Überlängenbereich 35 und 36 eine Überlänge einer ersten Lichtwellenleitung und eine Überlänge einer zweiten Lichtwellenleitung gespeichert werden kann, deren Lichtleitfasern miteinander zu verbinden sind. Im Prinzip können auch zwei Kassettenspeicher nebeneinander angeordnet werden, die jeweils nur einen einzigen Überlängenspeicherbereich aufweisen.

Die Achsenstäbe 28 sind in jedem Überlängenreiter 22 und 23 zwischen der oberen Festlagerplatte 29 und der unteren Festlagerplatte 30 in einem Halbkreisbogen angeordnet. Auf den Achsenstäben 28 sind drehbar Führungsrollen 24 gelagert, die auf ihrem Außenumfang Führungsrillen 26 aufweisen. In diesen Führungsrillen 26 der Führungsrollen 24 kann jeweils eine Überlänge einer Lichtwellenleitung 5, wie es der untere Überlängenspeicherbereich 36 zeigt, gelagert bzw. gespeichert werden. Die halbkreisbogenförmige Anordnung der Achsenstäbe 28 berücksichtigt dabei den minimal zulässigen Krümmungsradius R der Lichtwellenleitung. Dieser Krümmungsradius R, der durch die Anordnung der Führungsrollen 24 mit ihren Führungsrillen 26 für die Lichtwellenleitung 5 gebildet wird, muss größer als der Radius r der Führungsrollen 24 sein.

In der hier gezeigten Ausführungsform des Kassettenspeichers 1 sind dazu sieben Führungsrollen 24 in einem Halbkreisbogen auf den halbkreisbogenförmig angeordneten Achsenstäben 28 angeordnet. Mit einem derartigen Kassettenspeicher 1, wie ihn Figur 1 zeigt, ist es möglich, die in Figur 1 gezeigte gespeicherte Lichtwellenleitungsüberlänge 25 aus einem ortsfesten Kassettenspeicher 1, der beispielsweise in einem Regal eines Schaltschranks angeordnet ist, herauszuziehen, wobei sich der in Figur 1 gezeigte Abstand aₘₐₓ auf einen Abstand zwischen aₘₐₓ und Null verringert. Im ausgezogenen Zustand der Lichtwellenleitungsüberlänge 25 liegen dann die Überlängenreiter 22 und 23 aneinander und bilden mit ihren halbkreisförmig angeordneten Führungsrollen einen Führungskreis für die Lichtwellenleitungsüberlänge 25. Beim Herausziehen der Lichtwellenleitungsüberlänge 25 aus der Speicherkassette 1 wird gleichzeitig ein Federmechanismus 40 gespannt, der dafür sorgt, dass die größte Rückstellkraft für den gleitverschieblichen Überlängenreiter 22 bei maximal ausgezogener Lichtwellenleitungsüberlänge 25 erreicht wird.

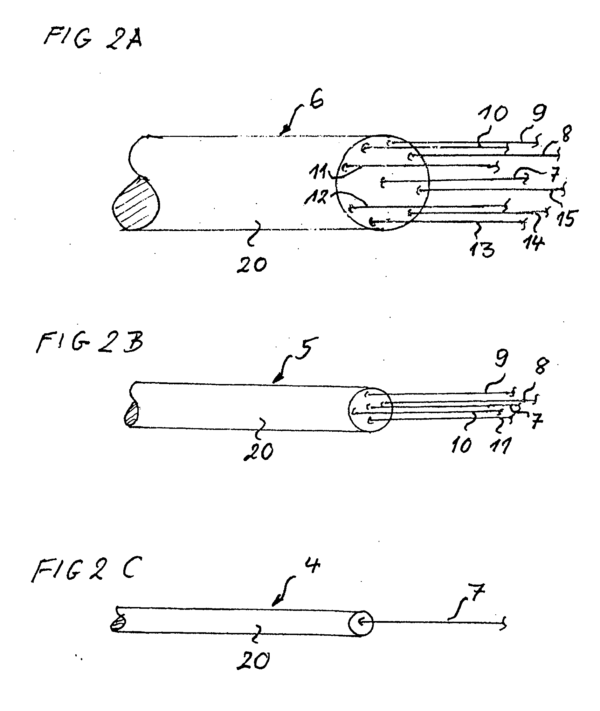

Figur 2 zeigt mit den Figuren 2A, 2B und 2C schematische perspektivische Ansichten von Lichtwellenleitungen 4, 5 und 6 mit einer unterschiedlichen Anzahl von Lichtwellenleitern 7 bis 15. Figur 2A zeigt eine übliche Lichtwellenleitung 6 mit einem Durchmesser einer Ummantelung 20 von beispielsweise 2,4 mm, die üblicherweise bis zu 15 Lichtwellenleiter aufnehmen kann, von denen in dieser Darstellung lediglich die Lichtwellenleiter 7-15 gezeigt werden. Wie einleitend schon beschrieben, besteht jeder Lichtwellenleiter 7 bis 15 in der Lichtwellenleitung 6 aus einem Kernbereich von unter einem Mikrometer einer Lichtleitfaser, der umgeben ist von Licht leitenden Schichten, deren Brechungsindex entweder kontinuierlich oder stufenweise abnimmt und einen Durchmesser von etwa 100 Mikrometern erreicht. Die Ummantelung 20 besteht aus Kunststoff, der die Lichtwellenleiter 7-15 der Lichtwellenleitung 6 mechanisch schützt.

Mit Figur 2B wird schematisch eine Lichtwellenleitung 5 gezeigt, die mit den Lichtwellenleitern 7-11 weniger Lichtwellenleitern in der Ummantelung 20 aus Kunststoff aufnimmt. Der Durchmesser der Ummantelung 20 kann gegenüber der Ummantelung 20, die in Figur 2A gezeigt wird, abnehmen. Den geringsten Durchmesser der Ummantelung 20 weist die Lichtwellenleitung 4 in Figur 2C auf, bei der lediglich ein Lichtwellenleiter 7 von der Ummantelung 20 eingeschlossen ist. Dabei kann die Ummantelung einen Durchmesser von unter einem Millimeter aufweisen.

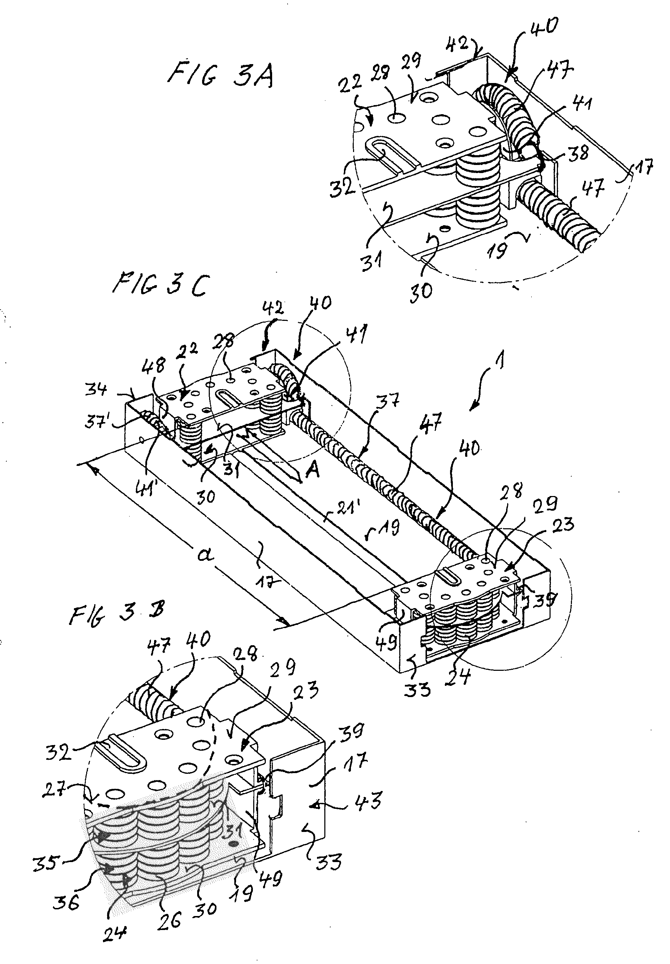

Figur 3 zeigt eine schematische perspektivische Ansicht des Kassettenspeichers 1 gemäß Figur 1 mit dem Federmechanismus 40 im Detail. Dazu zeigt Figur 3A eine Umlenkrolle 41 des Federmechanismus 40, die in einem Querseitenbereich 42 des Kassettenspeichers 1 ortsfest und drehbar fixiert ist. Auf der Umlenkrolle 41 wird eine helixförmige Schraubenfeder 47 geführt, die auf ihrem ausziehbaren Federelementende 38 an der Zwischenplatte 31 des gleitverschieblichen Überlängenreiters 22 unter einer Federvorspannung eingehängt ist. Das zweite Federelementende 39 ist in Figur 3B zu sehen und ist dort in die Zwischenlagerplatte 31 des fixierten Überlängenreiters 23 eingehängt. Sobald sich wie Figur 3C zeigt der gleitverschiebliche Reiter 22 beim Ausziehen der hier nicht gezeigten Lichtwellenleitungsüberlänge in Pfeilrichtung A auf den fixierten Überlängenreiter 23, der in Figur 3B gezeigt wird, zubewegt, erhöht sich die Vorspannung bis zu einem Maximum, wenn der in Figur 3C gezeigte Abstand a auf Null abnimmt und damit die beiden Überlängenreiter aneinander liegen. Die damit erreichte maximale Federspannung sorgt dafür, dass automatisch die Lichtwellenleitungsüberlänge zurück in den Kassettenspeicher 1 einziehbar ist.

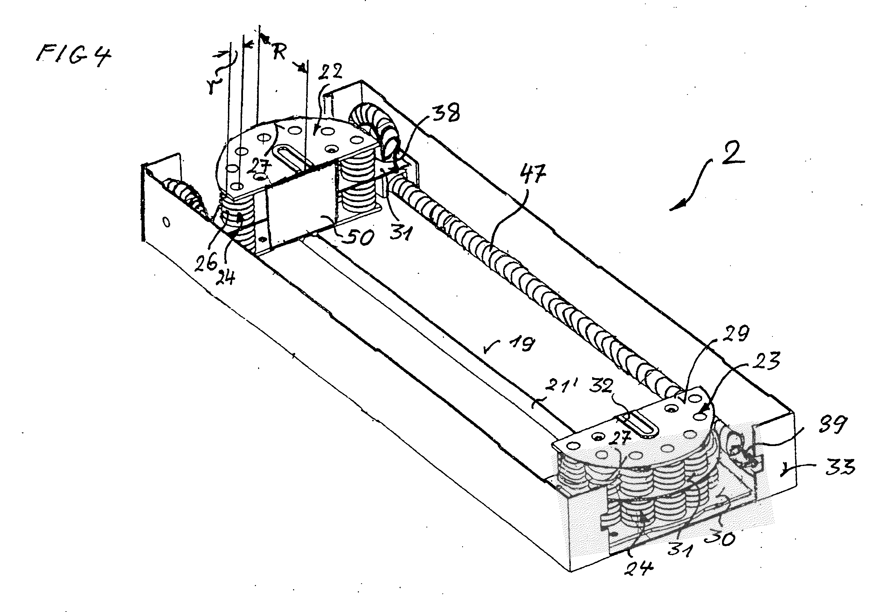

Figur 4 zeigt eine schematische perspektivische Ansicht eines Kassettenspeichers 2 gemäß einer zweiten Ausführungsform der Erfindung bei abgenommener Kassettenabdeckung. Bei dieser zweiten Ausführungsform der Erfindung sind sowohl die obere Festlagerplatte 29 als auch die Zwischenlagerplatte als Halbkreisbogen 27 mit einem Halbkreisbogenradius von R ausgebildet und ermöglichen damit, wie Figur 4 deutlich zeigt, einen freien Zugang zu den Führungsrollen 24 beim Aufwickeln oder Vorkonditionieren des Kassettenspeichers 2. Beim Vorkonditionieren des Kassettenspeichers 2 wird nämlich ein in Figur 3 nicht gezeigtes Einzugsseil, anstelle der einzuziehenden Lichtwellenleitungsüberlängen, um die Überlängenreiter 22 und 23 gewickelt und in den Führungsrillen 26 der Führungsrollen 24 abgelegt und anschließend durch Einhängen der Federelementenden 38 und 39 vorgespannt.

Beim anschließenden Einbringen der Lichtwellenleitungsüberlängen in den Kassettenspeicher am Schaltschrank wird lediglich das Einzugsseil des vorkonditionierten Kassettenspeichers mit einem freien Ende der einzuziehenden Lichtwellenleitungsüberlänge verbunden und das Einzugsseil aus dem vorkonfektionierten Kassettenspeicher unter Umwickeln der Überlängenreiter 22 und 23 mit der Lichtwellenleitungsüberlänge gezogen. Um die Stabilität der Überlängenreiter 22 und 23 zu verbessern, ist ein zusätzlicher Abstandshalter 50 zwischen der oberen Festlagerplatte 29 und der unteren Festlagerplatte 30 eingebaut. Dafür wird auf die seitlich an den Festlagerplatten 29, 30 und 31 angebrachten Abstandshalter, die in den vorhergehenden Figuren mit Bezugszeichen 48 und 49 gezeigt werden, verzichtet.

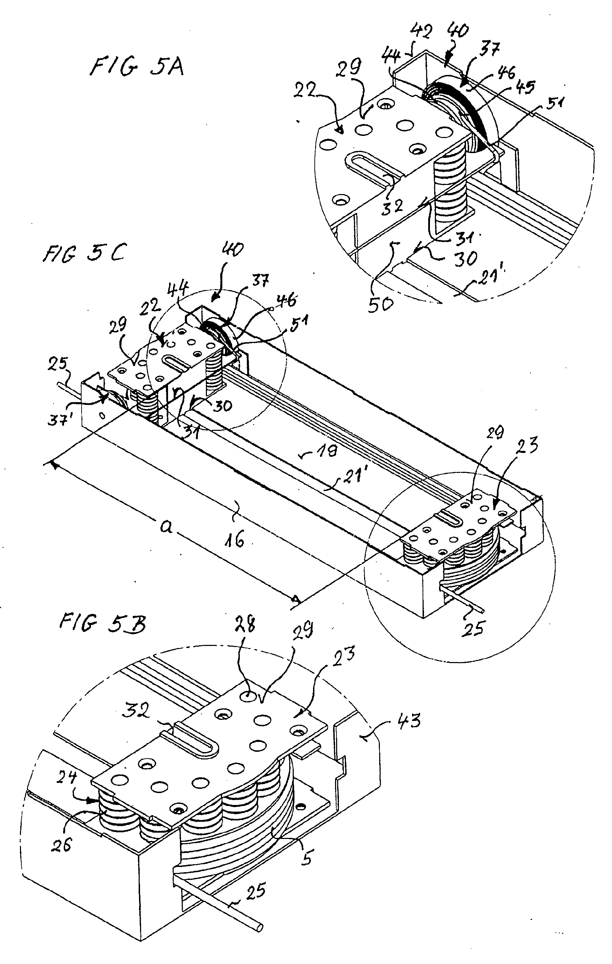

Figur 5 zeigt mit den Figuren 5A, 5B und 5C eine schematische perspektivische Ansicht eines Kassettenspeichers 3 gemäß einer dritten Ausführungsform der Erfindung. Diese dritte Ausführungsform der Erfindung unterscheidet sich von den vorhergehenden Ausführungsformen durch einen geänderten Aufbau der Federmechanik 40. Als Federelemente 37 bzw. 37' werden hier jeweils Spiralfedern 46 eingesetzt. Die Zugelemente 45 sind in Form von Zugseilen auf Zugelementvorratsrollen 44 gewickelt, wie es Figur 5A in Vergrößerung zeigt, und mit freien Enden 51 mit der Zwischenplatte 31 des gleitverschieblichen Reiters 22 verbunden. Beim Verringern des Abstands a zwischen den beiden Überlängenreitern 22 und 23, wie es Figur 5C zeigt, werden die Spiralfedern 46 auf der gemeinsamen Achse mit den Zugelementvorratsrollen 44 zunehmend gespannt, so dass beim Abstand a = 0 die Vorspannung am größten ist.

Figur 6 zeigt einen Abschnitt eines Panels 53 bzw. einer Schublade eines Verteilerschranks in dem mehrere Kassettenspeicher 1' und 1" mit gespeicherten Überlängen angeordnet sind. Jeder Kassettenspeicher 1' und 1" von Überlängen von Lichtwellenleitungen 5 steht mit einer LWL-Modulkassette 52', 52", 52'" über die Lichtwellenleitungen 5 in Verbindung. In der LWL-Modulkassette 52', 52", 52'" sind die einzelnen Lichtwellenleiter bzw. -fasern der in den Überlängen-Kassettenspeichern 1' und 1" gespeicherten Lichtwellenleitungen 5 miteinander paarweise verknüpft oder mit anderen Lichtwellenleiterfasern einzeln optisch gekoppelt. Bei Verknüpfungs- oder Verbindungsänderungen der Lichtwellenleiterpaarungen, die in der LWL-Modulkassette 52', 52", 52'" angeordnet und/oder verstaut sind, muss lediglich die betreffende LWL-Modulkassette 52', 52", 52'" aus einem Verteilerschrank bzw. dem Panel 53 herausgezogen werden wie beispielsweise die Modulkassette 52' in Figur 6, während der Kassettenspeicher 1' im Verteilerschrank bzw. im Panel 53 verbleibt und nur die Überlänge der Lichtwellenleitungen 5 und 5' beispielsweise aus dem Kassettenspeicher 1' je nach Montagebedarf auf unterschiedliche Länge in Pfeilrichtung Z herausgezogen wird, wie es in Figur 6 dargestellt ist und beim Zurücklegen der LWL-Modulkassette 52' in das Panel 53 werden die Überlängen der Lichtwellenleitungen 5 und 5' automatisch in den Kassettenspeicher 1' in Pfeilrichtung R zurückgespult.

Obwohl beispielhafte Ausführungsformen in der vorhergehenden Beschreibung gezeigt wurden, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der Kassettenspeichers in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von den in den beispielhaften Ausführungsformen beschriebenen Elementen gemacht werden können, ohne von dem Schutzbereich der angefügten Ansprüche und ihrer rechtlichen Äquivalente abzuweichen.

### Bezugszeichenliste

- 1: Kassettenspeicher (1. Ausführungsform)
- 2: Kassettenspeicher (2. Ausführungsform)
- 3: Kassettenspeicher (3. Ausführungsform)
- 4: Lichtwellenleitung
- 5: Lichtwellenleitung
- 6: Lichtwellenleitung
- 7-15: Lichtwellenleiter
- 16: Kassettengehäuse
- 17: Rahmen
- 18: Kassettenabdeckung
- 19: Kassettenboden
- 20: Ummantelung
- 21, 21': Längsführung
- 22: Überlängenreiter
- 23: Überlängenreiter
- 24: Führungsrolle
- 25: Lichtwellenleitungsüberlänge
- 26: Führungsrille
- 27: Halbkreisbogen
- 28: Achsenstab
- 29: Festlagerplatte
- 30: Festlagerplatte
- 31: Zwischenlagerplatte
- 32: Kunststoffgleitstein
- 33: Längsende
- 34: Längsende
- 35: Überlängenspeicherbereich
- 36: Überlängenspeicherbereich
- 37, 37': Federelement
- 38: Federelementende
- 39: Federelementende
- 40: Federmechanismus
- 41, 41': Umlenkrolle
- 42: Querseite der Umlenkrolle
- 43: Querseite des fixierten Reiters
- 44: Zugelementvorratsrolle
- 45: Zugelement
- 46: Spiralfeder
- 47: helixförmige Feder
- 48: Abstandshalter
- 49: Abstandshalter
- 50: Abstandshalter
- 51: freies Ende des Zugelements

- A: Pfeilrichtung
- a: Abstand
- aₘₐₓ: maximater Abstand
- R: Halbkreisbogenkreisradius
- r: Führungsrillenkreisradius

## Patentansprüche

1. Kassettenspeicher einer Überlänge einer Lichtwellenleitung (4, 5, 6), wobei die Lichtwellenleitung (4, 5, 6) wenigstens einen Lichtwellenleiter (7 bis 15) in einer Ummantelung (20) aufweist, und der Kassettenspeicher (1, 2, 3) ein Kassettengehäuse (16), einen umgebenden Rahmen (17), eine Kassettenabdeckung (18) und einen Kassettenboden (19) aufweist, wobei zwei Überlängenreiter (22, 23) der Lichtwellenleitung (4, 5, 6) zwischen dem Kassettenboden (19) und der Kassettenabdeckung (18) angeordnet sind und die zwei Überlängenreiter (22, 23) in einem variablen Abstand (a) zueinander gehalten und einander gegenüberliegend angeordnet sind, und wobei der Kassettenboden (19) und die Kassettenabdeckung (18) jeweils eine Längsführung (21, 21') aufweisen, wobei die Überlängenreiter (22, 23) mit den Längsführungen (21, 21') in Eingriff stehen und wenigstens einer der Überlängenreiter (22) gleitverschieblich in den Längsführungen (21, 21') geführt ist, und wobei die Überlängenreiter (22, 23) federelastisch bei minimaler Vorspannung auf maximalem Abstand (aₘₐₓ) bei maximaler gespeicherter Lichtwellenleitungsüberlänge (25) gehalten sind und bei minimaler gespeicherter Lichtwellenleitungsüberlänge (25) unter maximaler federelastischer Vorspannung aneinander liegen.

2. Kassettenspeicher nach Anspruch 1, wobei jeder der beiden Überlängenreiter (22, 23) der Lichtwellenleitung (5, 6) Führungsrollen (24) aufweist, die einen Außenmantel mit eingearbeiteten Führungsrillen (26) für ein beabstandetes Anlegen und Führen der Überlänge wenigstens einer Lichtwellenleitung (5) aufweisen.

3. Kassettenspeicher nach Anspruch 2, wobei in jedem Überlängenreiter (22, 23) der Lichtwellenleitung mehrere Führungsrollen (24) auf einem Halbkreisbogen (27) angeordnet sind, wobei ein Halbkreisbogenkrümmungsradius (R) des Halbkreisbogens (27) im Vergleich zu den Führungsrillenkrümmungsradien (r) der einzelnen Führungsrollen (24) um ein Vielfaches größer ist.

4. Kassettenspeicher nach Anspruch 2 oder Anspruch 3, wobei in jedem der beiden Überlängenreiter (22, 23) der Lichtwellenleitung (5) mehrere Führungsrollen (24) auf einem gemeinsamen drehfesten Achsenstab (28) übereinander drehbar gelagert sind.

5. Kassettenspeicher nach Anspruch 3 oder Anspruch 4, wobei jeder Überlängenreiter (22, 23) der Lichtwellenleitung (5) mindestens eine obere und eine untere Festlagerplatte (29, 30) aufweist, zwischen denen in dem Halbkreisboden angeordnete drehfeste Achsenstäbe (28) fixiert sind, auf welchen die Führungsrollen (24) drehbar lagern.

6. Kassettenspeicher nach Anspruch 5, wobei die Festlagerplatten (29, 30) wenigstes eines der Überlängenreiter (22, 23) der Lichtwellenleitung Kunststoffgleitsteine (32) aufweisen, die mit den Längsführungen (21, 21') des Kassettenbodens (19) und der Kassettenabdeckung (18) gleitverschieblich in Eingriff stehen.

7. Kassettenspeicher nach einem der vorhergehenden Ansprüche, wobei einer der beiden Überlängenreiter (22, 23) der Lichtwellenleitung (5) an einem der Längsenden (33) des Kassettenspeichers fixiert ist und der andere der beiden Überlängenreiter (22, 23) der Lichtwellenleitung (5) gleitverschieblich in den Längsführungen (21, 21') des Kassettenbodens (19) und der Kassettenabdeckung (18) gelagert ist.

8. Kassettenspeicher nach einem der Ansprüche 5 bis 7, wobei zwischen der oberen und der unteren Festlagerplatte (29, 30) eine Zwischenlagerplatte (31) in jedem Überlängenreiter (22, 23) des Kassettenspeichers (1, 2, 3) angeordnet ist, die einen oberen Überlängenspeicherbereich (35) von einem unteren Überlängenspeicherbereich (36) trennt, so dass zwei Lichtwellenleitungsüberlängen (25) in einem Kassettenspeicher (1, 2, 3) speicherbar sind.

9. Kassettenspeicher nach einem der vorhergehenden Ansprüche, wobei der Kassettenspeicher (1, 2, 3) einen Federmechanismus (40) aufweist, der die Überlängenreiter (22, 23) der Lichtwellenleitung (5) unter Federvorspannung auf Abstand hält, wobei der Federmechanismus (40) derart angeordnet ausgebildet ist, dass mit abnehmendem Abstand (a) zwischen den beiden Überlängenreitern (22, 23) die Federvorspannung zunimmt.

10. Kassettenspeicher nach Anspruch 9, wobei der Federmechanismus (40) wenigstens ein Federelement (37) aufweist, das mit einem ersten Federelementende (38) an dem gleitverschieblichen Überlängenreiter (22) fixiert ist und über eine ortsfeste Umlenkrolle (41) mit dem zweiten Federelementende (39) an einer dem gleitverschieblichen Überlängenreiter (22) gegenüberliegenden inneren Querseite (43) des umgebenden Rahmens fixiert ist.

11. Kassettenspeicher nach Anspruch 9 oder Anspruch 10, wobei der Federmechanismus (40) zwei Federelemente (37, 37') und zwei Umlenkrollen (41, 41') auf beiden Seiten der Überlängenreiter (22, 23) aufweist.

12. Kassettenspeicher nach Anspruch 10 oder Anspruch 11, wobei das Federelement (37) eine helixförmige Schraubenfeder ist.

13. Kassettenspeicher nach Anspruch 10, wobei ein unter zunehmender Federspannung ausziehbares Zugelement (45) auf einer Zugelementvorratsrolle (44) angeordnet ist und eine Spiralfeder (46) mit der Achse der Zugelementvorratsrolle (44) verbunden ist.

14. Kassettenspeicher nach einem der vorhergehenden Ansprüche, wobei der Kassettenspeicher ein Einzugsseil aufweist, das um die Überlängenreiter gewickelt ist und mit einem Koppelende und einem Einzugsende aus dem Kassettenspeicher herausragt.

15. Kassettenspeicher nach einem der vorhergehenden Ansprüche, wobei der Kassettenspeicher (1) eine Arretierungseinrichtung aufweist, die ausgebildet ist, um wenigstens eine der Überlängen der Lichtwellenleitungen (5, 6) in einem wenigstens teilweise ausgezogenen Zustand zu arretieren.

16. Kassettenspeicher nach einem der vorhergehenden Ansprüche, wobei jeder Kassettenspeicher einer Überlänge einer Lichtwellenleitung (4, 5, 6) mit einer LWL-Modulkassette (55) in Verbindung steht, in der die einzelnen Lichtwellenleiter (1 bis 7) bzw. -fasern der in dem Überlängen-Kassettenspeicher (1 bis 3) der gespeicherten Lichtwellenleitung (3 bis 6) miteinander paarweise verknüpft oder mit anderen Lichtwellenleiterfasern (1 bis 7) einzeln optisch gekoppelt sind.
